# EUROPÄISCHE PATENTSCHRIFT

(11) **EP 2 087 055 B1**
(45) Veröffentlichungstag und Bekanntmachung des Hinweises auf die Patenterteilung: **13.07.2011**
(21) Anmeldenummer: 07821495.4
(22) Anmeldetag: 18.10.2007
(51) Int. Cl.: C09J 5/02

(54) **VERWENDUNG EINER LÖSUNG ZUR VORBEHANDLUNG EINES HYDROPHILEN UNTERGRUNDES ZUR VERBESSERUNG EINER VERKLEBUNG BEI FEUCHTEN UND NASSEN BEDINGUNGEN**
USE OF A SOLUTION FOR PRETREATING A HYDROPHILIC SUBSTRATE FOR THE PURPOSE OF IMPROVING AN ADHESIVE BOND UNDER HUMID AND WET CONDITIONS
UTILISATION D'UNE SOLUTION POUR LE PRÉTRAITEMENT D'UNE SOUS-COUCHE HYDROPHILE POUR L'AMÉLIORATION D'UNE ADHÉSION EN CONDITIONS HUMIDES

(30) Priorität: 03.11.2006 DE 102006052262; 27.06.2007 DE 102007030196
(43) Veröffentlichungstag der Anmeldung: 12.08.2009
(73) Patentinhaber: TESA SE, 20253 Hamburg (DE)
(72) Erfinder: KRAWINKEL, Thorsten, 22457 Hamburg (DE); JUNGHANS, Andreas, 22457 Hamburg (DE); SEIBEL, Eugenia, 21077 Hamburg (DE)
(86) Internationale Anmeldenummer: PCT/EP2007/061130
(87) Internationale Veröffentlichungsnummer: WO 2008/052887

(56) Entgegenhaltungen:
- EP-A- 1 582 571
- DE-A1- 2 648 240
- DE-A1- 19 813 081
- US-A- 4 356 233
- US-A- 5 427 860
- DATABASE WPI Week 198904 Derwent Publications Ltd., London, GB; AN 1989-029235 XP002466043 & JP 63 304078 A (NIPPON SYNTHETIC CHEM IND CO) 12. Dezember 1988 (1988-12-12)

## Beschreibung

Die Erfindung betrifft die Verwendung einer Lösung zur Vorbehandlung eines hydrophilen Untergrunds wie Glas, um die Haftung eines Klebemittels auf diesem Untergrund bei feuchten und nassen Bedingungen zu verbessern, Verpackungen enthaltend die Lösung sowie einen Kit aus der Lösung und einer Klebstofffolie.

Für die Verklebung leichter Gegenstände im Haushalt werden häufig Klebebänder, Schmelzkleber oder Reaktivkleber verwendet. Da die Halteleistung auf festen Untergründen gegenüber spaltbaren Untergründen erhöht ist, wird wenn möglich auf Metall, Keramikfliesen oder Glas verklebt. Neben der Verwendung im Haushalt werden Klebemittel zur Verklebung von Glas, Metall etc. auch in der industriellen Produktion eingesetzt.

Die Oberflächen Keramik und Glas haben gemeinsam, dass sie als hydrophil eingestuft werden können. Hydrophile Untergründe besitzen die Eigenschaft, oftmals eine sehr dünne Schicht adsorbierten Wassers auf der Oberfläche gebunden zu haben, die erst bei sehr hohen Temperaturen entfernt werden kann. Diese Schicht kann besonders bei hoher Luftfeuchtigkeit oder Einwirkung von Wasser weiteres Wasser aufnehmen und dadurch die Verklebungsleisturig bis hin zum vollständigen Versagen der Verklebung, beeinträchtigen.

Die Reaktion von Klebern kann durch Feuchtigkeit inhibiert werden, wenn diese Kleber eine kovalente Bindung mit der Oberfläche ausbilden müssen, um ihre Funktion zu erfüllen.

Haftklebmassen sind häufig auf der Basis von Acrylaten, Naturkautschuk oder Styrolblockcopolymeren aufgebaut. Besonders Haftklebmassen für doppelseitige Klebebänder bestehen zumeist aus Acrylaten oder Styrolblockcopolymeren, wobei die Halteleistung bei den Acrylaten häufig etwas geringer ist. Gerade unter feuchten Bedingungen zeigen diese ein genau gegenläufiges Verhalten, Acrylathaftklebmassen sind deutlich weniger anfällig gegenüber Nässe und Feuchtigkeit als Blockcopolymermassen.

Auch der Aufbau der Klebebänder trägt zur Empfindlichkeit gegenüber Feuchtigkeit bei, so sind harte Klebmassen und Klebebänder mit starren Trägern häufig anfälliger als solche mit sehr flexiblen Trägern. Besonders doppelseitige Klebebänder mit Schaumstoffzwischenträger reagieren empfindlich auf Feuchtigkeit, wenn sie auf hydrophilen Untergründen verklebt werden.

Heißschmelzklebmassen bestehen aus Styrolblockcopolymeren oder aus Ethylenvinylacetat. Beide Arten der Heißschmelzkleber sind anfällig gegenüber Feuchtigkeit.

Industrielle Lösungen für dieses Problem sind bekannt. So werden auf Gläser vor einer Verklebung Haftvermittler aufgetragen, die die Oberfläche hydrophobieren und die genannte Wasserschicht damit eliminieren. Für die Hydrophobierung werden Organosilane eingesetzt. Am häufigsten finden dabei solche der allgemeinen Formel

(RO)₃Si-(CH₂)ₙ-X

| | |
|---|---|
| Verwendung mit | R = CH₃ oder C₂H₅, |
| | n = 1 bis 12 und |
| | einer funktionellen Gruppe X. |

Nach dem Aufbringen des Silans auf die hydrophile Oberfläche wird eine kovalente Bindung zwischen Oberfläche und Silan ausgebildet. Wenn die Oberfläche vollständig silanisiert wurde, ist der oben beschriebene Wasserfilm entfernt und kann auch nicht mehr gebildet werden, so dass das Wasser nicht mehr die Möglichkeit hat, hinter die Verklebung zu laufen.

Dabei gibt es Silane, die mit Kleber und Oberfläche reagieren, und solche, die nur die Oberfläche hydrophobieren, um ein anschließendes Kleben zu erleichtern und den Klebeverbund zu verstärken. Beschrieben ist die Anwendung eines solchen Silans zum Beispiel in der WO 2005/040296 A1, in der ein Silan vor der Verklebung auf einen Haftklebstoff aufgebracht wird. Nach der Verklebung muss noch mindestens 24 Stunden gewartet werden, bis die Endverklebungsfestigkeit erreicht ist.

Weiterhin können diese Silane in reaktive und mäßig reaktive unterteilt werden. Reaktive Silane führen innerhalb von wenigen Minuten zu einer effektiven Hydrophobierung einer Oberfläche, ein Effekt, der mit mäßig reaktiven Silanen erst nach Stunden erreicht wird. Der Vorteil mäßig reaktiver Silane ist allerdings ihre hohe Lagerstabilität von mehr als sechs Monaten sogar in Lösungen mit geringem Wasseranteil. In die Gruppe der reaktiven Silane fällt zum Beispiel γ-Amino-propyl-triethoxysilan. 3-Glycidoxypropyltrimethoxysilan ist dahingegen als mäßig reaktiv einzustufen.

In der WO 2005/040296 A1 ist sodann die Anwendung einer Lösung von 3-Glycidoxypropyltrimethoxysilan zur Verbesserung der Verklebung von Acrylat-Klebemassen auf Glasoberflächen gezeigt. In dieser Anwendung wird der Kontakt zwischen Klebemasse und Oberfläche hergestellt, bevor das Lösungsmittel verdampft ist, um so eine kovalente Anbindung des Silans sowohl an die Glasoberfläche als auch an die Klebmasse zu erreichen. Nach der Herstellung des Kontakts muss 72 Stunden gewartet werden, bevor eine Belastung der Verklebung erfolgen kann.

Das in WO 2005/040296 A1 dargestellte Vorgehen ist akzeptabel, wenn die Wartezeit von 72 Stunden eingehalten werden kann. In vielen Fällen führt diese Wartezeit aber zu einer Verzögerung der Produktion. Soll weiterhin die Vorbehandlung der Oberfläche durch den Endverbraucher bei privaten Anwendungen vorgenommen werden, so ist eine Verkürzung der Wartezeit absolut notwendig. Der Einsatz eines reaktiven Silans wie zum Beispiel γ-Amino-propyl-triethoxysilan, das in DE 198 13 081 A1 beschrieben ist, stellt aber auch keine Lösung des Problems dar, da hier die Lagerbeständigkeit zu gering ist. Konsumerprodukte zum Beispiel liegen häufig recht lange im Verkaufsraum oder beim Kunden, bevor sie angewendet werden. Lagerzeiten von zwei Jahren zwischen Produktion und Verwendung sind keine Seltenheit.

Aufgabe der Erfindung ist es, die Reaktionszeit eines mäßig reaktiven Silans deutlich zu verkürzen, so dass die Wartezeit bei der Anwendung als Haftvermittler auf unter 20 Stunden gesenkt werden kann. Gleichzeitig muss die Lagerstabilität erhalten bleiben.

Gelöst wird diese Aufgabe durch die Verwendung einer Lösung, wie sie im Hauptanspruch 1 dargelegt ist. Gegenstand der Unteransprüche sind vorteilhafte Fortbildungen des Erfindungsgegenstandes. Des Weiteren betrifft die Erfindung Verpackungen der Lösung sowie ein Set mit der Lösung und einer Klebstofffolie, wie sie in den Hauptansprüchen 11 und 14 dargelegt sind.

Demgemäß betrifft die Erfindung die Verwendung einer Lösung zur Hydrophobierung hydrophiler Oberflächen zur Verbesserung der Lebensdauer einer adhäsiven Klebeverbindung einer Klebemasse auf der Oberfläche unter Feuchtigkeitseinfluss und Nässe, wobei die Lösung enthält, ein Silan der Formel 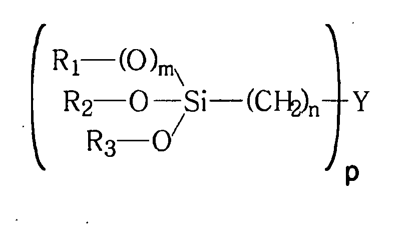 mit
R₁, R₂, R₃ unabhängig voneinander gewählt aus der Gruppe Methyl, Ethyl, 2-Methoxyethyl, i-Propyl
m = 0 oder 1
n= 0 bis 12
p = 1 oder 2
und für p=1
- Y =: einer funktionellen Gruppe gewählt aus der Gruppe Alkyl, Vinyl, Phenyl, Cyclobutyl, Cyclopentyl, Cyclohexyl, Glycidyl, Glycidyloxy, Isocyanato, Ureido, -CF₃, -(CF₂)_{q}CF₃ mit q = 1 bis 12, Cyanid, Halogenid, (Meth)acryl, (Meth)acryloxy, -NH-CH₂CH₂-NR⁴R⁵, -NR⁴R⁵ (mit R⁴ und R⁵ unabhängig voneinander gewählt aus der Gruppe H, Alkyl, Phenyl, Benzyl, Cyclopentyl, Cyclohexyl)
beziehungsweise
für p=2
Y = O, S, NH
sowie eine Komponente enthaltend; die bewirkt, dass der pH-Bereich der einen hydrophilen Oberfläche um mindestens zwei Einheiten vom neutralen Bereich abweicht, wobei die Lösung höchstens 1 Gew.-% Wasser enthält.

Überraschend wird durch die Lösung erreicht, dass neben dem Abweichen des pH-Werts der Haftvermittlerlösung um mindestens zwei pH-Einheiten vom neutralen Bereich die Lagerstabilität des Haftvermittlers auch bei verändertem pH-Wert erhalten bleibt.

Gemäß einer vorteilhaften Weiterbildung der Erfindung handelt es sich bei der Lösung um eine organische Lösung, sprich um eine Lösung mit einem oder mehreren organischen Lösungsmitteln.

Weiter vorzugsweise liegt der Siedepunkt des Lösungsmittels beziehungsweise des -gemischs zwischen 25 und 120 °C, um ein möglichst schnelles Verdunsten nach dem Auftragen der Lösung auf der Oberfläche zu ermöglichen.

Weiter vorzugsweise hat die erfindungsgemäße Lösung eine Konzentration von 0,01 bis 5 Gew.-% Silan, bevorzugt 0,1 bis 3 Gew.-%.

Es ist weiterhin vorteilhaft, wenn bei der Anwendung der erfindungsgemäßen Lösung keine besonderen Schutzmaßnahmen wie Handschuhe benötigt werden, weshalb möglichst ungefährliche Lösungsmittel bevorzugt eingesetzt werden wie zum Beispiel Ethanol oder Isopropanol. Weitere Lösungsmittel, die allein oder im Gemisch eingesetzt werden können, sind zum Beispiel n-Propanol, n-Butanol, i-Butanol, sek.-Butanol und/oder tert.-Butanol.

Ein geringer Anteil an Wasser kann in der Lösung vorhanden sein, ohne dass er sich nachteilig auf die Lagerstabilität auswirkt. Deutlich höhere Wasseranteile verkürzen die Lagerdauer allerdings beträchtlich.

Demgemäß enthält die Lösung erfindungsgemäß höchstens 1 Gew.-% Wasser.

Es ist von Silan zu Silan unterschiedlich, bei welchem pH-Wert die Reaktionsgeschwindigkeit besonders schnell oder langsam ist. Je nach Silan liegen die besten pH-Werte für eine ausreichend schnelle Reaktion auf der hydrophilen Oberfläche und einer guten Lagerstabilität entweder im mäßig sauren Bereich (pH-Wert 2 bis 5) oder im mäßig alkalischen Bereich (pH-Wert 9 bis 13).

Es werden der Silanlösung daher als Komponente Beschleuniger in Form einer Lauge oder Säure zugegeben, wobei diese möglichst wenig Wasser enthalten sollte. Die Säuren und Laugen sollten dabei nicht zu stark gewählt werden, müssen aber möglichst nach dem Aufbringen auf die Oberfläche verdunsten, damit es keine Rückstände gibt, die eine Verklebung negativ beeinflussen. Besonders gut haben sich hier Protonensäuren wie Essigsäure (konzentriert) und Ammoniak als Lösung in dem verwendeten Lösungsmittel dargestellt. Weitere Säuren, die verwendet werden können, sind zum Beispiel Ameisensäure und Propionsäure. Weitere Basen sind zum Beispiel Methylamin, Dimethylamin, Trimethylamin, Ethylamin, Diethylamin, Triethylamin, Propylamin, Isopropylamin, Dipropylamin, Diisopropylamin, Butylamin, sek.-Butylamin und/oder tert.-Butylamin. Der pH-Wert kann dabei über die Menge an Säure beziehungsweise Lauge eingestellt werden.

Neben einer Beschleunigung der Reaktion durch eine den pH-Wert verändernde Komponente ist auch die Verlangsamung dieser Reaktion durch einen entsprechenden pH-Wert denkbar. In diesem Fall würde ein reaktives Silan gewählt und durch Einstellen eines entsprechenden pH-Werts die Lagerbeständigkeit dieses Silans erhöhen werden. Die Reaktionszeit nach dem Auftragen auf die hydrophile Oberfläche sollte dabei weiterhin hinreichend kurz sein.

Am Beispiel der Reaktion der Silane mit einer Glasoberfläche kann die Funktionsweise der erfindungsgemäßen Lösung erläutert werden. Die Reaktion der Silane mit der Glasoberfläche läuft in zwei Schritten ab. Zum einen müssen die Silane hydrolisiert werden, das heißt, die alkoholischen Gruppen RO werden abgespalten und durch Hydroxygruppen ersetzt. Die dadurch entstandenen Si-OH (Silanol)-Gruppen reagieren dann zum einen mit sich selbst, zum anderen mit den OH-Gruppen der Glasoberfläche, wodurch eine kovalente Bindung entsteht. Wenn die Glasoberfläche vollständig silanisiert wurde, ist der oben beschriebene Wasserfilm entfernt und kann auch nicht mehr gebildet werden, so dass das Wasser nicht mehr die Möglichkeit hat, hinter die Verklebung zu laufen.

Die Darreichungsform ist besonders für die Anwendung im privaten Bereich durch den Endverbraucher von entscheidender Bedeutung. Bevorzugt sind hier die Abfüllung in Flaschen oder Dosen zum Beispiel als Pumpspray oder als Aerosol beziehungsweise eine Abfüllung in Siegelrandbeuteln mit einem Vlies. Solch ein Siegelrandbeutel besteht aus einer lösungsmittel- und wasserundurchlässigen Folie wie zum Beispiel einem Verbund aus PE/AI/PET. Diese Folie kann unter Einwirkung von Hitze verschweißt werden. In dem dadurch entstehenden Beutel befindet sich ein Tuch, am besten ein Vlies, das mit der Haftvermittlerlösung, bestehend zumindest aus Silan, Beschleuniger und Lösungsmittel getränkt ist. Für die Anwendung kann der Endverbraucher den Beutel aufreißen, das getränkte Tuch entnehmen und damit seinen keramischen Untergrund, seine Kachel oder das Glas, auf dem verklebt werden soll, vorbehandeln.

Eine bevorzugte Darreichungsform ist außerdem die Abfüllung in Flaschen enthaltend ein Reservoir und einen Applikator. Die Silanlösung wird hierbei durch Kontaktieren der Oberfläche mit dem Applikator aufgetragen.

Besonders bevorzugt ist eine Darreichungsform einer Verpackung, bei der die das Silan enthaltende Lösung sowie der bevorzugt eingesetzte Beschleuniger voneinander so lange getrennt sind, bis der Verwender die zumindest aus Silan, Beschleuniger und Lösungsmittel bestehende Haftvermittlerlösung einsetzen möchte.

Dies gilt insbesondere für den Fall, wenn das Silan sowie der Beschleuniger im gleichen Lösungsmittel gelöst sind.

Beispielsweise kann die Verpackung aus einem Kunststoffbeutel mit zwei Kammern bestehen, wobei in einer ersten Kammer das vorzugsweise in einem Lösungsmittel befindliche Silan vorhanden ist und in einer zweiten, von der ersten räumlich getrennten Kammer die Komponente, die bewirkt, dass der pH-Bereich der einen hydrophilen Oberfläche um mindestens zwei Einheiten vom neutralen Bereich abweicht und die voneinander durch eine Trennmembran getrennt sind, die bei Bedarf geöffnet werden kann, beispielsweise sei es entweder durch ein einfaches Drücken auf eine oder beide Kammern oder durch ein Herausziehen der Membran. Die beiden Kammern können auch über eine gemeinsame Schweißnaht miteinander verknüpft sein, die sich zumindest abschnittsweise durch Druck öffnen lässt, was ebenfalls zu einer Vermischung der Inhalte der beiden Kammern führt.

Des Weiteren kann zusätzlich in einer weiteren Kammer das mit der letztlich vollständigen Haftvermittlerlösung zu tränkende Vlies in die Verpackung integriert sein, zum Beispiel in einer dritten Kammer, die lösbar mit den anderen zwei verbunden sein kann. Gemäß einer anderen Ausführungsform kann das Vlies samt des beschriebenen Zweikammerbeutels von einer (Papp-)Verpackung umschlossen sein.

Werden die beiden Beutel der Zweikammerverpackung geöffnet, vermischen sich die beiden Lösungen erst kurz vor der Anwendung miteinander. Durch die räumliche Trennung wird eine erhebliche Steigerung der Lagerstabilität erzielt gegenüber den Mischungen, die bereits unmittelbar nach der Herstellung der einzelnen Komponenten angesetzt wird.

Neben den erwähnten Zweikammerbeuteln kann die Trennung auch in einer Zweikammerkunststoffflasche, wie sie für Zweikomponentenkleber benutzt wird und wie sie in der Kosmetikindustrie weit verbreitet ist, erfolgen, wobei beispielsweise über einen Pumpmechanismus beide Flüssigkeiten in einem Mischkopf miteinander in Kontakt gebracht werden, bevor sie die Verpackung verlassen.

Sodann kann statt einer Zweikammerflasche eine Tube mit zwei Kammern eingesetzt werden.

Ganz besonders bevorzugt sind derartige Verpackungslösungen, in denen die zwei Flüssigkeiten getrennt sind und bei denen der Anwender selbst bei der Anwendung mit den beiden Flüssigkeiten beziehungsweise der sich ergebenden Haftvermittlerlösung nicht in Kontakt kommen kann. Dies kann beispielsweise dadurch verwirklicht werden, dass die beiden die Flüssigkeiten enthaltenden Beutel kurzgeschlossen werden und dabei direkt ein entsprechend verpacktes Vlies benetzen, das zum Auftragen der entstandenen Haftvermittlerlösung dient. Vorzugsweise kommt nur ein kleiner Teil des Vlieses mit den Flüssigkeiten in Kontakt, so dass am Vlies ein Bereich verbleibt, der nicht mit Flüssigkeit getränkt ist und der als Anfasser dient, an dem der Verwender das Vlies in die Hand nehmen kann.

Eine weitere Möglichkeit ist eine Verpackung, bei der die beiden Lösungen getrennt voneinander sind, aber mit Hilfe eines Vlieses oder Watte- beziehungsweise Schaumstoffstäbchens nacheinander aufgenommen werden können und sich erst hier vermischen.

Optimalerweise geschieht die Reaktion auf der Oberfläche dann innerhalb weniger Minuten, so dass anschließend die Verklebung und auch die Belastung der Verklebung erfolgen können. Je nach Art des Silans und des Beschleunigersystems kann dann sofort eine Einwirkung von Wasser oder Feuchtigkeit erfolgen, oder es muss noch einige Zeit gewartet werden. Dieser Zeitraum kann auf die jeweilige Anwendung angepasst werden.

Bevorzugt in Kombination mit der Erfindung verwendbare Klebebänder sind hochelastische Klebstofffolien für wiederlösbare Verklebungen, die durch Ziehen in Richtung der Verklebungsebene wieder lösbar sind. Diese Klebstofffolien sind im Handel unter den Bezeichnungen "tesa Powerstrips"® und "tesa Posterstrips"® und "tesa Powerstrips System-Haken"®, ein so genannter Systemhaken mit Basisplatte und aufsteckbarem Dekorhaken, von der tesa AG erhältlich.

Elastisch oder plastisch hochdehnbare Haftklebestreifen, welche sich durch dehnendes Verstrecken in der Verklebungsebene rückstands- und zerstörungsfrei wieder ablösen lassen, sind des Weiteren beispielsweise aus der US 4,024,312 A, DE 33 31 016 C2, WO 92/11332 A1, WO 92/11333 A1, DE 42 22 849 A1, WO 95/06691 A1, DE 195 31 696 A1, DE 196 26 870 A1, DE 196 49 727 A1, DE 196 49 728 A1, DE 196 49 729 A1, DE 197 08 364 A1, DE 197 20 145 A1, DE 198 20 854 A1, WO 99/37729 A1 und DE 100 03 318 A1 bekannt.

### Prüfmethoden

Im Gegensatz zu der üblichen Prüfung zur Wasserresistenz einer Verklebung besonders im Bereich der Haftklebstoffe und Klebebänder wird kein Schältest vor und nach Wasserlagerung durchgeführt, da in diesem Falle die Klebung nicht belastet ist, das Wasser also deutlich schwieriger in die Verklebungsfuge eindringen kann.

Stattdessen wird ein Haken einer bestimmten Größe verklebt und mit einem bestimmten Gewicht belastet. Nun wird die Verklebung bei 35 °C und 85 % r.F. gelagert und in

Abständen von 24 Stunden mit Wasser beträufelt und die Haltedauer in Stunden notiert. Zur Kontrolle wird auch eine Verklebung ohne Haftvermittlerlösung durchgeführt.

Die folgenden Beispiele sollen dazu dienen, die Erfindung zu veranschaulichen, ohne sie einzuschränken zu wollen.

### Beispiele

### Herstellung der Haftvermittler

### Vergleichsbeispiel 1

1 g γ-Aminopropyltriethoxysilan werden in 99 g Ethanol (wasserfrei) gelöst. 1 mL dieser Lösung wird zusammen mit einem PP-Vlies von 6 x 12 cm Fläche in einen Aluminium beschichteten Siegelrandbeutel gegeben und verschweißt.

### Vergleichsbeispiel 2

1 g 3-Glycidoxypropyltrimethoxysilan werden in 99 g Ethanol (wasserfrei) gelöst. 1 mL dieser Lösung wird zusammen mit einem PP-Vlies von 6 x 12 cm Fläche in einen Aluminium beschichteten Siegelrandbeutel gegeben und verschweißt.

### Beispiel 3

1 g 3-Glycidoxypropyltrimethoxysilan, 1 g Ammoniaklösung in Ethanol (20 Gew.-%) werden in 98 g Ethanol (wasserfrei) gelöst. 1 mL dieser Lösung wird zusammen mit einem PP-Vlies von 6 x 12 cm Fläche in einen Aluminium beschichteten Siegelrandbeutel gegeben und verschweißt.

Zur Untersuchung der Lösungen werden jeweils zwei Beutel von jeder Lösung geöffnet und mit jedem getränkten Vlies eine Keramikkachel mit einer glatten Glasierung bestrichen. Nach einer Wartezeit von 15 min wird auf die vorbehandelte Kachel zum einen ein doppelseitiges Acrylatfix, tesa 4952 (ein doppelseitiges Klebeband mit einem Schaumstoffträger und einer alterungsbeständigen Acrylatklebemasse mit einer Dicke von 1,2 mm und einer Klebkraft auf Stahl von 14 N / 25 mm), in einer Größe von 50 x 19 mm, zum anderen drei Powerstrips® Large der Firma tesa (doppelseitig klebende, trägerlose, einzeln eingesiegelte Stanzlinge mit einer Klebemasse basierend auf Synthesekautschuk mit einer Dicke von 0,65 mm und einer Klebkraft auf Stahl von 74,0 N / 25mm) geklebt. Diese sind ausführlich beschrieben in der DE 33 31 016 C2, DE 42 22 849 A1, DE 42 33 872 A1, DE 44 31 914 A1, DE 195 37 323 A1, DE 197 08 364 A1, DE 197 29 706 und DE 100 33 399 A1.

Auf die Klebemittel wird mit einem Druck von 100 N eine gesäuberte Stahlbasisplatte verklebt, die so aufgebaut ist, dass ein Hakenkörper mit einem senkrecht abstehenden Stab aus Metall aufgesetzt werden kann. Die Kacheln werden senkrecht befestigt, und an den Haken werden im Abstand von 50 mm ein Gewicht von 200 g beim Acrylatfix und 1 kg beim Powerstrip gehängt. Nach einer Wartezeit von 2 Stunden beziehungsweise 24 Stunden wird Wasser (2 mL) oben auf die Verklebung geträufelt. Diese Benetzung wird alle 24 Stunden wiederholt. Gemessen wird die Zeit, nach der der Haken von der Wand fällt. Als Vergleich werden Haken ohne Haftvermittler aufgehängt.

Dieser Versuch wird mit Frischmustern und gelagerten Beuteln (2 Monate bei 40 °C) durchgeführt. Die Ergebnisse sind Tabelle 1 zu entnehmen.

**Tabelle 1:**

| | Wartezeit in Stunden nach der ersten Zugabe von Wasser | | | |
|---|---|---|---|---|
| | Vergleichsbeispiel 1 | Vergleichsbeispiel 2 | Beispiel 3 | Ohne Haftvermittler |
| Frische Lösung 2 h Wartezeit Acrylatfix | > 500 | 6 | > 500 | 1 |
| Frische Lösung 24 h Wartezeit Acrylatfix | > 500 | > 500 | > 500 | 2 |
| Frische Lösung 2 h Wartezeit Powerstrips | > 500 | 2 | > 500 | < 1 |
| Frische Lösung 24 h Wartezeit Powerstrips | > 500 | > 500 | > 500 | 1 |
| Gelagerte Lösung 2 h Wartezeit Acrylatfix | 2 | 3 | > 500 | |
| Gelagerte Lösung 24 h Wartezeit Acrylatfix | 3 | > 500 | > 500 | |
| Gelagerte Lösung 2 h Wartezeit Powerstrips | 1 | 2 | > 500 | |
| Gelagerte Lösung 24 h Wartezeit Powerstrips | 2 | > 500 | > 500 | |

Es zeigt sich, dass nur mit einer geeigneten Kombination aus Silan und Beschleuniger eine ausreichend schnelle Reaktion möglich, trotzdem aber eine gute Lagerstabilität gegeben ist.

## Patentansprüche

1. Verwendung einer Lösung zur Hydrophobierung hydrophiler Oberflächen zur Verbesserung der Lebensdauer einer adhäsiven Klebverbindung einer Klebmasse auf der Oberfläche unter Feuchtigkeitseinfluss und Nässe, wobei die Lösung enthält ein Silan der Formel 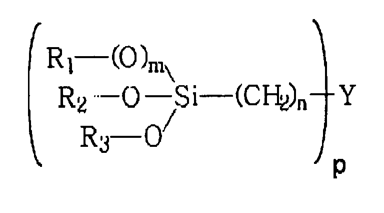 mit
R₁, R₂, R₃ unabhängig voneinander gewählt aus der Gruppe Methyl, Ethyl, 2-Methoxyethyl, i-Propyl
m = 0 oder 1
n = 0 bis 12
p = 1 oder 2
und für p = 1
Y = einer funktionellen Gruppe gewählt aus der Gruppe Alkyl, Vinyl, Phenyl, Cyclobutyl, Cyclopentyl, Cyclohexyl, Glycidyl, Glycidyloxy, Isocyanato, Ureido, -CF₃, -(CF₂)_{q}CF₃ mit q = 1 bis 12, Cyanid, Halogenid, (Meth)acryl, (Meth)acryloxy, -NH-CH₂-CH₂-NR⁴R⁵, -NR⁴R⁵ (mit
R⁴ und R⁵ unabhängig voneinander gewählt aus der Gruppe H, Alkyl, Phenyl, Benzyl, Cyclopentyl, Cyclohexyl) beziehungsweise
für p= 2
Y= O, S, NH
sowie eine Komponente, die bewirkt, dass der pH-Bereich der einen hydrophilen Oberfläche um mindestens zwei Einheiten vom neutralen Bereich abweicht,
wobei die Lösung höchstens 1 Gew.-% Wasser enthält.

2. Verwendung nach Anspruch 1, **dadurch gekennzeichnet, dass** das Silan in einer Konzentration von 0,1 bis 5 Gew.-%, bevorzugt 0,1 bis 3 Gew.-%, in einem Lösungsmittel oder Lösungsmittelgemisch vorliegt.

3. Verwendung nach Anspruch 1 oder 2, **dadurch gekennzeichnet, dass** der pH-Wert zwischen 2 und 5 liegt.

4. Verwendung nach Anspruch 1 oder 2, **dadurch gekennzeichnet, dass** der pH-Wert zwischen 9 und 13 liegt.

5. Verwendung nach Anspruch 3, **dadurch gekennzeichnet, dass** der pH-Wert über eine Protonensäure, insbesondere Ameisen-, Essig- und/oder Propionsäure, eingestellt wird.

6. Verwendung nach Anspruch 4, **dadurch gekennzeichnet, dass** der pH-Wert über eine Lauge wie Methylamin, Dimethylamin, Trimethylamin, Ethylamin, Diethylamin, Triethylamin, Propylamin, Isopropylamin, Dipropylamin, Diisopropylamin, Butylamin, sek.-Butylamin und/oder tert.-Butylamin eingestellt wird, insbesondere über Ammoniak.

7. Verwendung nach zumindest einem der vorherigen Ansprüche, **dadurch gekennzeichnet, dass** das Lösungsmittel oder Lösungsmittelgemisch einen Siedepunkt von unter 120 °C aufweist.

8. Verwendung nach zumindest einem der vorherigen Ansprüche, **dadurch gekennzeichnet, dass** es sich bei den verwendeten Lösungsmitteln um Ethanol und/oder Isopropanol handelt.

9. Verwendung der Lösung nach zumindest einem der vorherigen Ansprüche, **dadurch gekennzeichnet, dass** diese als Pumpspray oder als Aerosol vorliegt beziehungsweise in ein Vlies enthaltende Siegelrandbeuteln abgefüllt ist.

10. Verwendung der Lösung nach zumindest einem der Ansprüche 1 bis 8 zur Hydrophobierung hydrophiler Oberflächen und anschließender Verklebung einer durch Ziehen in Richtung der Verklebungsebene beschädigungslos wieder lösbaren Klebstofffolie mit einer Klebmasse auf Basis von Polymeren und/oder Copolymeren aus Synthesekautschuk und/oder Naturkautschuk.

11. Verpackung, enthaltend eine Lösung zur Hydrophobierung hydrophiler Oberflächen zur Verbesserung der Lebensdauer einer adhäsiven Klebverbindung einer Klebmasse auf der Oberfläche unter Feuchtigkeitseinfluss und Nässe, wobei die Lösung enthält ein Silan der Formel 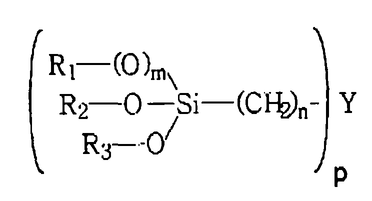 mit
R₁, R₂, R₃ unabhängig voneinander gewählt aus der Gruppe Methyl, Ethyl, 2-Methoxyethyl, i-Propyl
m = 0 oder 1
n = 0 bis 12
p = 1 oder 2
und für p = 1
Y = einer funktionellen Gruppe gewählt aus der Gruppe Alkyl, Vinyl, Phenyl, Cyclobutyl, Cyclopentyl, Cyclohexyl, Glycidyl, Glycidyloxy, Isocyanato, Ureido, -CF₃, -(CF₂)_{q}CF₃ mit q = 1 bis 12, Cyanid, Halogenid, (Meth)acryl, (Meth)acryloxy, -NH-CH₂-CH₂-NR⁴R⁵, -NR⁴R⁵ (mit
R⁴ und R⁵ unabhängig voneinander gewählt aus der Gruppe H, Alkyl, Phenyl, Benzyl, Cyclopentyl, Cyclohexyl) beziehungsweise
für p= 2
Y = O, S, NH
sowie eine Komponente, die bewirkt, dass der pH-Bereich der einen hydrophilen Oberfläche um mindestens zwei Einheiten vom neutralen Bereich abweicht,
wobei die Lösung höchstens 1 Gew.-% Wasser enthält,
wobei in einer ersten Kammer das vorzugsweise in einem Lösungsmittel befindliche Silan vorhanden ist und in einer zweiten, von der ersten räumlich getrennten Kammer die Komponente, die die bewirkt, dass der pH-Bereich der einen hydrophilen Oberfläche um mindestens zwei Einheiten vom neutralen Bereich abweicht.

12. Verpackung nach Anspruch 11, **dadurch gekennzeichnet, dass** das vorzugsweise in einem Lösungsmittel befindliche Silan und die Komponente erst unmittelbar vor der Anwendung miteinander vermischt werden, indem die räumliche Trennung der beiden Kammern aufgehoben wird.

13. Verpackung nach Anspruch 11 oder 12, **dadurch gekennzeichnet, dass** die Verpackung derart gestaltet ist, dass ein Anwender nicht mit der fertigen Mischung aus dem vorzugsweise in einem Lösungsmittel befindlichen Silan und der Komponente bis zum Auftragen der Mischung auf den Untergrund in Kontakt kommt.

14. Set aus einer Lösung nach zumindest einem der vorherigen Ansprüche und einer Klebstofffolie zum Befestigen eines Gegenstandes, wobei die Klebstofffolie mit einer Klebmasse auf Basis von Polymeren und/oder Copolymeren aus Synthesekautschuk und/oder Naturkautschuk durch Ziehen in Richtung der Verklebungsebene beschädigungslos wieder lösbar ist.

## Claims

1. Use of a solution for hydrophobicizing hydrophilic surfaces for improving the lifetime of an adhesional adhesive bond of an adhesive on the surface under the influence of humidity and wetness, the solution comprising a silane of the formula 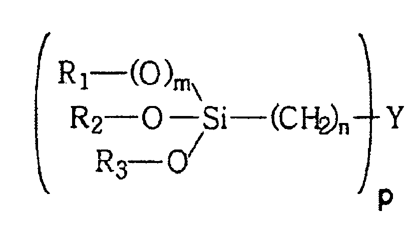 where
R₁, R₂ and R₃ independently of one another are selected from the group consisting of methyl, ethyl, 2-methoxyethyl and isopropyl,
m = 0 or 1,
n = 0 to 12,
p = 1 or 2
and when p = 1
Y = a functional group selected from the group consisting of
alkyl, vinyl, phenyl, cyclobutyl, cyclopentyl, cyclohexyl, glycidyl, glycidyloxy, isocyanato, ureido, -CF₃, -(CF₂)_{q}CF₃ with q = 1 to 12, cyanide, halide, (meth)acryloyl, (meth)acryloyloxy, -NH-CH₂-CH₂-NR⁴R⁵, -NR⁴R⁵ (with R⁴ and R⁵ independently of one another selected from the group consisting of H, alkyl, phenyl, benzyl, cyclopentyl and cyclohexyl)
or
when p = 2
Y = O, S or NH
and also a component whose effect is that the pH range of one hydrophilic surface deviates by at least two units from the neutral range,
the solution comprising not more than 1% by weight of water.

2. Use according to Claim 1, **characterized in that** the silane is present in a concentration of 0.1% to 5% by weight, preferably 0.1% to 3% by weight, in a solvent or solvent mixture.

3. Use according to Claim 1 or 2, **characterized in that** the pH is between 2 and 5.

4. Use according to Claim 1 or 2, **characterized in that** the pH is between 9 and 13.

5. Use according to Claim 3, **characterized in that** the pH is adjusted via a protic acid, more particularly formic, acetic and/or propionic acid.

6. Use according to Claim 4, **characterized in that** the pH is adjusted via an alkali such as methylamine, dimethylamine, trimethylamine, ethylamine, diethylamine, triethylamine, propylamine, isopropylamine, dipropylamine, diisopropylamine, butylamine, sec-butylamine and/or tert-butylamine, more particularly via ammonia.

7. Use according to at least one of the preceding claims, **characterized in that** the solvent or solvent mixture has a boiling point of below 120°C.

8. Use according to at least one of the preceding claims, **characterized in that** the solvents used are ethanol and/or isopropanol.

9. Use of the solution according to at least one of the preceding claims, **characterized in that** it is in the form of a pump spray or an aerosol or has been filled into sealed-edge pouches containing a nonwoven material.

10. Use of the solution according to at least one of Claims 1 to 8 for hydrophobicizing hydrophilic surfaces and subsequently bonding an adhesive sheet which is redetachable without damage by pulling in the direction of the bond plane and comprises an adhesive based on polymers and/or copolymers of synthetic rubber and/or natural rubber.

11. Pack comprising a solution for hydrophobicizing hydrophilic surfaces for improving the lifetime of an adhesional adhesive bond of an adhesive on the surface under the influence of humidity and wetness, the solution comprising a silane of the formula 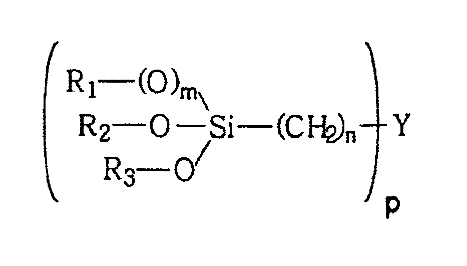 where
R₁, R₂ and R₃ independently of one another are selected from the group consisting of methyl, ethyl, 2-methoxyethyl and isopropyl,
m = 0 or 1,
n = 0 to 12,
p = 1 or 2
and when p = 1
Y = a functional group selected from the group consisting of
alkyl, vinyl, phenyl, cyclobutyl, cyclopentyl, cyclohexyl, glycidyl, glycidyloxy, isocyanato, ureido, -CF₃, - -(CF₂)_{q}CF₃ with q = 1 to 12, cyanide, halide, (meth)acryloyl, (meth) acryloyloxy, -NH-CH₂-CH₂-NR⁴R⁵, -NR⁴R⁵ (with R⁴ and R⁵ independently of one another selected from the group consisting of H, alkyl, phenyl, benzyl, cyclopentyl and cyclohexyl)
or
when p = 2
Y = O, S or NH
and also a component whose effect is that the pH range of one hydrophilic surface deviates by at least two units from the neutral range,
the solution comprising not more than 1% by weight of water,
a first chamber comprising the silane, preferably in a solvent, and a second chamber, spatially separate from the first, containing the component whose effect is that the pH range of one hydrophilic surface deviates by at least two units from the neutral range.

12. Pack according to Claim 11, **characterized in that** the silane which is preferably in a solvent, and the component, are not mixed with one another until immediately prior to use, by eliminating the spatial separation of the two chambers.

13. Pack according to Claim 11 or 12, **characterized in that** the pack is designed such that a user does not come into contact with the completed mixture of the silane which is present preferably in a solvent, and the component, until the mixture is applied to the substrate.

14. Set comprising a solution according to at least one of the preceding claims and an adhesive sheet for fixing an article, the adhesive sheet, with an adhesive based on polymers and/or copolymers of synthetic rubber and/or natural rubber, being redetachable without damage by pulling in the direction of the bond plane.

## Revendications

1. Utilisation d'une solution pour l'hydrofugation de surfaces hydrophiles en vue de l'amélioration de la durée de vie d'un composé adhésif d'une masse adhésive sur la surface sous l'influence de l'humidité et dans des conditions mouillées, la solution contenant un silane de formule 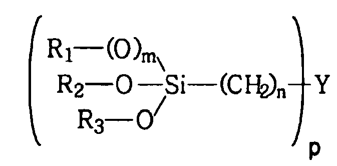 où
R₁, R₂, R₃ sont choisis indépendamment l'un de l'autre dans le groupe comprenant méthyle, éthyle, 2- méthoxyéthyle, i-propyle
m = 0 ou 1,
n = 0 à 12
p = 1 ou 2
et pour p = 1
Y = un groupe fonctionnel choisi dans le groupe comprenant alkyle, vinyle, phényle, cyclobutyle, cyclopentyle, cyclohexyle, glycidyle, glycidyloxy, isocyanato, uréido, -CF₃, - (CF₂)_{q}CF₃ avec q = 1 à 12, cyanure, halogénure, (méth)acryle, (méth)acryloxy, -NH-CH₂-CH₂-NR⁴R⁵, -NR⁴R⁵ (avec R⁴ et R⁵ choisis indépendamment l'un de l'autre dans le groupe comprenant H, alkyle, phényle, benzyle, cyclopentyle, cyclohexyle)
ou, selon le cas,
pour p = 2
Y = O, S, NH
ainsi qu'un composant qui fait que la plage de pH de ladite surface hydrophile s'écarte d'au moins deux unités de la zone neutre,
la solution contenant au plus 1% en poids d'eau.

2. Utilisation selon la revendication 1, **caractérisée en ce que** le silane se trouve en une concentration de 0,1 à 5% en poids, de préférence de 0,1 à 3% en poids, dans un solvant ou un mélange de solvants.

3. Utilisation selon la revendication 1 ou 2, **caractérisée en ce que** le pH est situé entre 2 et 5.

4. Utilisation selon la revendication 1 ou 2, **caractérisée en ce que** le pH est situé entre 9 et 13.

5. Utilisation selon la revendication 3, **caractérisée en ce que** le pH est réglé via un acide protonique, en particulier l'acide formique, acétique et/ou propionique.

6. Utilisation selon la revendication 4, **caractérisée en ce que** le pH est réglé via une lessive telle que la méthylamine, la diméthylamine, la triméthylamine, l'éthylamine, la diéthylamine, la triéthylamine, la propylamine, l'isopropylamine, la dipropylamine, la diisopropylamine, la butylamine, la sec-butylamine et/ou la tert-butylamine, en particulier via l'ammoniaque.

7. Utilisation selon au moins l'une quelconque des revendications précédentes, **caractérisée en ce que** le solvant ou le mélange de solvants présente un point d'ébullition inférieur à 120°C.

8. Utilisation selon au moins l'une quelconque des revendications précédentes, **caractérisée en ce qu'**il s'agit, pour les solvants utilisés, d'éthanol et/ou d'isopropanol.

9. Utilisation de la solution selon au moins l'une quelconque des revendications précédentes, **caractérisée en ce qu'**elle se trouve sous forme de spray à pompe ou d'aérosol ou, selon le cas, est transvasée dans des sachets à bords scellés contenant un non-tissé.

10. Utilisation de la solution selon au moins l'une quelconque des revendications 1 à 8 pour l'hydrofugation de surfaces hydrophiles et le collage consécutif d'une feuille adhésive réamovible sans dégradation par traction dans le sens du plan de collage, présentant une masse adhésive à base de polymères et/ou de copolymères de caoutchouc de synthèse et/ou de caoutchouc naturel.

11. Emballage, contenant une solution pour l'hydrofugation de surfaces hydrophiles destinée à améliorer la durée de vie d'un composé adhésif d'une masse adhésive sur la surface sous l'influence de l'humidité et dans des conditions mouillées, la solution contenant un silane de formule 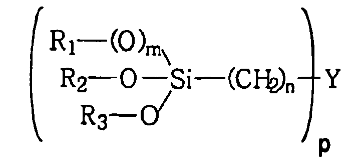 où
R₁, R₂, R₃ sont choisis indépendamment l'un de l'autre dans le groupe comprenant méthyle, éthyle, 2- méthoxyéthyle, i-propyle
m = 0 ou 1,
n = 0 à 12
p = 1 ou 2
et pour p = 1
Y = un groupe fonctionnel choisi dans le groupe comprenant alkyle, vinyle, phényle, cyclobutyle, cyclopentyle, cyclohexyle, glycidyle, glycidyloxy, isocyanato, uréido, -CF₃, - (CF₂)_{q}CF₃ avec q = 1 à 12, cyanure, halogénure, (méth)acryle, (méth)acryloxy, -NH-CH₂-CH₂-NR⁴R⁵, -NR⁴R⁵ (avec R⁴ et R⁵ choisis indépendamment l'un de l'autre dans le groupe comprenant H, alkyle, phényle, benzyle, cyclopentyle, cyclohexyle) ou, selon le cas,
pour p = 2
Y = O, S, NH
ainsi qu'un composant qui fait que la plage de pH de ladite surface hydrophile s'écarte d'au moins deux unités de la zone neutre,
la solution contenant au plus 1% en poids d'eau,
où le silane se trouvant de préférence dans un solvant se trouve dans une première chambre et le composant qui fait que la plage de pH de ladite une surface hydrophile s'écarte d'au moins deux unités de la zone neutre se trouve dans une deuxième chambre, séparée dans l'espace de la première chambre.

12. Emballage selon la revendication 11, **caractérisé en ce que** le silane se trouvant de préférence dans un solvant et le composant ne sont mélangés l'un avec l'autre que juste avant l'application et **en ce que** la séparation dans l'espace des deux chambres est supprimée.

13. Emballage selon la revendication 11 ou 12, **caractérisé en ce que** l'emballage est réalisé de manière telle qu'un utilisateur n'entre pas en contact avec le mélange fini constitué par le silane se trouvant de préférence dans un solvant et le composant jusqu'à l'application du mélange sur le substrat.

14. Kit constitué par une solution selon au moins l'une quelconque des revendications précédentes et une feuille adhésive pour la fixation d'un objet, la feuille adhésive présentant une masse adhésive à base de polymères et/ou de copolymères de caoutchouc de synthèse et/ou de caoutchouc naturel étant réamovible sans dégradation par traction dans le sens du plan de collage.
